# EUROPEAN PATENT APPLICATION

(11) **EP 2 786 678 A1**
(43) Date of publication of application: **08.10.2014**
(21) Application number: 14160331.6
(22) Date of filing: 17.03.2014
(51) Int. Cl.: A47C 7/00

(54) **Improved coupling for furniture components**

(30) Priority: 05.04.2013 IT VE20130011
(71) Applicant: Metalmeccanica Alba S.r.l., 31020 San Zenome Degli Ezzelini (IT)
(72) Inventor: Di Filippo, Mario, 31031 CAERANO DI SAN MARCO (IT); Zanotto, Paolo, 20133 MILANO (IT)
(74) Representative: Piovesana, Paolo

(57) **Abstract**

An improved coupling (2) for furniture components (4), characterised by comprising two cheeks (10, 12) which can be fitted together, and be connected together by clamping means (16), and in which:
- each cheek (10, 12, 44) comprises a plurality of seats (20) which with similar seats of the other cheek define corresponding housings for tubular elements (24) to be secured between the two cheeks,
- each seat (20) opens at the edge of the respective cheek (10, 12, 44), has a cross-section such as to define with the corresponding seat (20) of the other cheek (10, 12, 44) a housing of cross-section slightly less than that of the tubular element (24) to be secured, and is provided with a flat longitudinal wall to block the rotation of the tubular element (24) within the housing itself,
- each seat (20) provided in at least one cheek (10, 12, 44) is provided with at least one projecting element (32) cooperating with a complementary hole provided in that tubular element (24) intended to be associated with that seat (20),
- each seat (20) of at least one cheek (12, 44) comprises an arched portion (26) which extends from the seat (20) itself towards the other cheek (10) to define with said seat (20) a closed cross-section, in which that tubular element (24) intended to be associated with that seat (20) engages.

## Description

The present invention relates to an improved coupling for furniture components.

Various types of couplings are known for fixing together the various constituent parts of a furniture component. These are used for example for fixing the top of a table or the seating portion of a chair to the four support legs, or for fixing the body of several chairs to a horizontal bar, or to fix together the sides of two adjacent shelving units. These traditional couplings generally consist normally of a block to which the various parts to be fixed together are welded.

However the use of welding makes these couplings of poor appearance, and moreover makes it particularly difficult to release the bond defined by them. The fact that the coupling has to be welded to the other parts of the furniture component means that this latter has to be transported in its assembled condition, with consequent high space requirement in the steps preceding its use.

In contrast, those couplings of known type to be assembled directly by the final user are difficult to mount and often require specific expertise and/or particular tools, with which the final user is not always provided.

US 2815801 relates to a chair coupling consisting of two parts to be screwed together.

An object of the invention is to eliminate all these drawbacks by providing an improved coupling which is demountable, of pleasant appearance and easy to assemble, even by a non-expert user.

Another object of the invention is to provide an improved coupling which enables a stable and robust connection between the various parts of the furniture component.

Another object of the invention is to provide an improved coupling which also acts as a temporary stabilizing element for use during the steps involved in mounting the furniture component.

Another object of the invention is to provide an improved coupling which is extremely versatile in use and is obtainable easily, quickly and at low production cost.

These and other objects which will be apparent from the ensuing description are achieved according to the invention by an improved coupling for furniture components with the characteristics indicated in claim 1.

Some preferred embodiments of the present invention are further clarified hereinafter by way of non-limiting example with reference to the accompanying drawings, in which:
- Figure 1: is a perspective view of a chair using the improved coupling according to the invention,
- Figure 2: is an exploded perspective view of the coupling from below,
- Figure 3: is an exploded perspective view of the coupling from above,
- Figure 4: is a lateral view of a chair using a different embodiment of the improved coupling according to the invention,
- Figure 5: is a perspective view of the coupling in the assembled configuration,

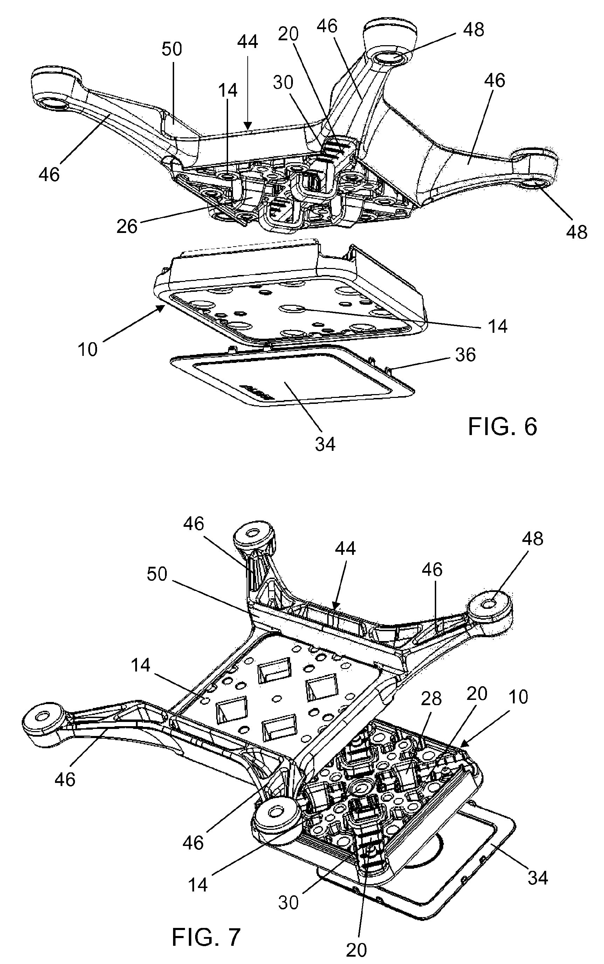

- Figure 6: is an exploded perspective view thereof from below,
- Figure 7: is an exploded perspective view thereof from above.

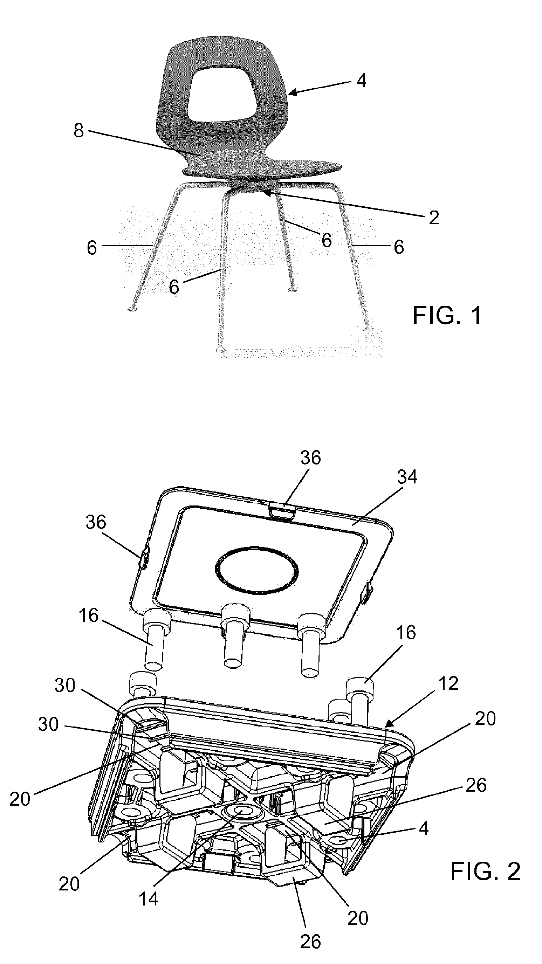

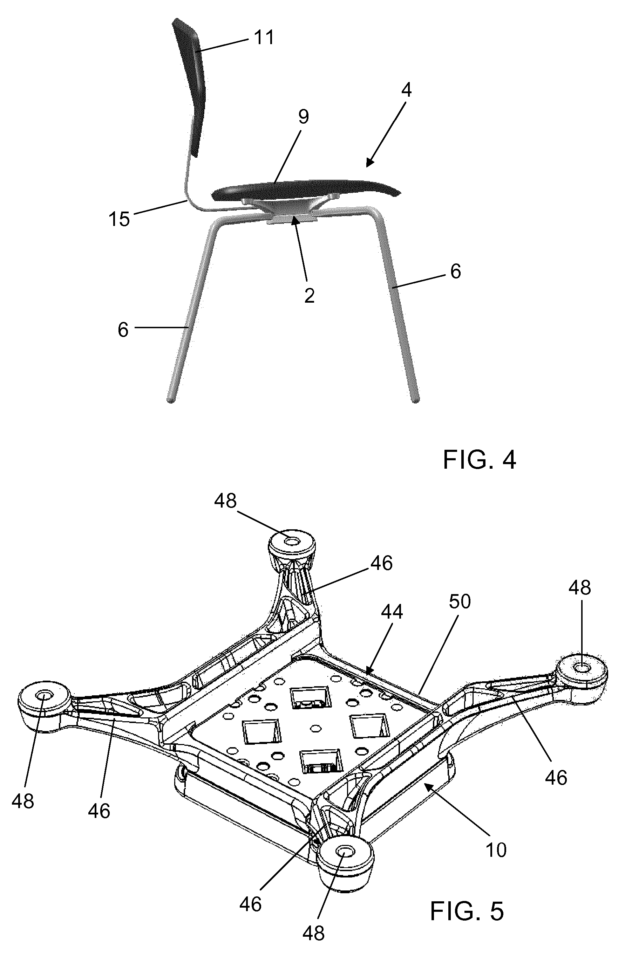

As can be seen from Figures 1 and 4, the improved coupling 2 according to the invention, which is generally applicable to various furniture components (chairs, bench seats, tables, shelving, etc.), is described herein in its particular use in a chair 4, to fix together the four legs 6 and to connect them to a one-piece body 8, comprising a seating portion and a back-rest (see Figure 1), or to just the seating portion 9; more particularly, in this latter case (see Figure 4), the back-rest 11 of the chair 4 is constructed separately from the seating portion 9 and is fixed thereto by a bracket 15 retained between the coupling 2 and the seating portion itself. When circumstances require it, one and the same furniture component can incorporate a plurality of couplings 2 according to the invention.

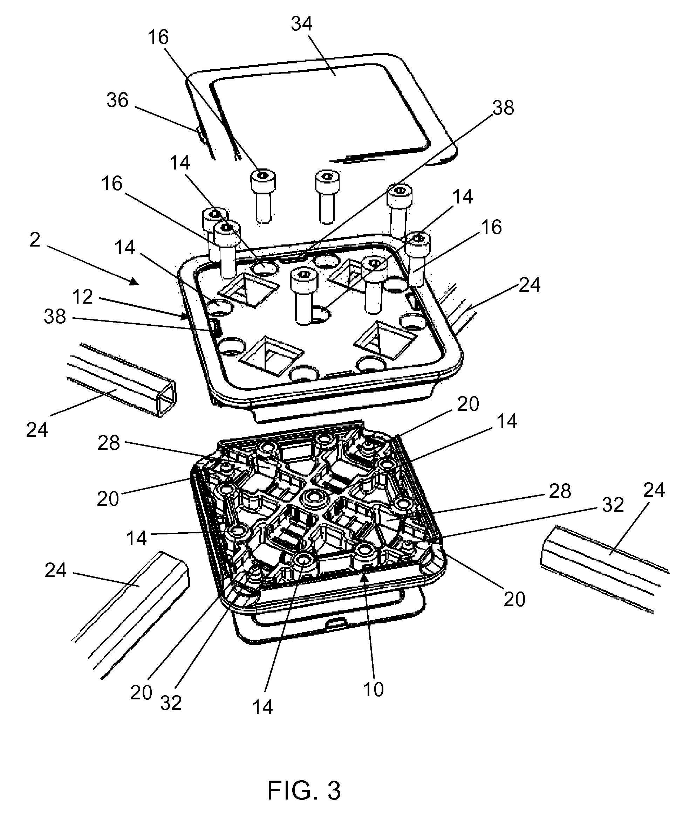

With reference to Figures 2 and 3, the improved coupling 2 comprises two cheeks, a lower 10 and an upper 12, which can be connected together; in particular, each cheek 10, 12 consists substantially of a plate, from the overall surface of which there perpendicularly extend a plurality of relief portions defining a series of recesses.

The cheeks 10, 12 can be made of plastic material or of metal, for example aluminium.

In the embodiment shown here, the plates 10, 12 are square, however they can also be of polygonal, oval, elliptical or irregular shape.

The connection between the two cheeks 10, 12 is preferably obtained by screws 16, which can traverse through holes 14 provided in one of the two cheeks 12 and engage in threaded seats provided in the other cheek, or can traverse through holes provided in both the cheeks 10, 12 and engage in nuts housed in suitable seats provided in the cheek opposite that into which the screws are inserted. In this latter case, the clamping screws 16 can have a length greater than the overall thickness of the two cheeks 10, 12 when coupled together, such as to emerge beyond the outer surface of that cheek opposite that into which the screws are inserted, to also constitute fixing means for other parts of the furniture component.

In the inner surface of both the cheeks 10, 12 depressed seats 20 are defined at 90° apart and open at the edges of said cheeks; preferably said seats 20 extend from the centre of the cheeks 10, 12 and open on their outer edge.

By coupling together the inner surfaces of the two cheeks 10, 12, housings are defined in the seats 20 for tubular elements 24 to be locked therein. In particular, the housing defined in this manner is of substantially square cross-section with dimensions slightly less than those of the tubular profile 24 such as to enable the profile 24 to be clamped in the seat 20 when the cheeks 10, 12 are coupled together.

The upper cheek 12 is also provided with an arched portion 26 which extends downwards between the lateral walls of each seat 20; this is particularly advantageous during the assembly for example of a chair, in that after their insertion into the seats 20 the tubular profiles 24, which constitute the legs of the chair, remain stably attached to the cheek 12, even before its secure fixing to the other cheek 10, by virtue of the clamping effect which the arched portions 26 are able to exert on said legs. Preferably, each portion 26 defines with the respective seat 20 a substantially square cross-section, which clamps the tubular profile 24, preventing it from rotating within the respective housing.

The seats 20 of the lower cheek 10 are suitably provided with recesses 28 to receive the corresponding arched portion 26 defined in the upper cheek 12, when the two cheeks 10, 12 are coupled together.

Advantageously, on the bottom of the seats 20 a series of transverse projections 30 are defined which, when the two cheeks 10, 12 are coupled together, retain the four tubular elements 24 by adhering thereto and deform plastically to improve the effectiveness of the connection.

On the bottom of the seats 20 there are also provided projecting pins 32 intended to cooperate with corresponding holes provided in the tubular profiles 24 to block axial movement of these latter along the seats 20. The pins 32 can be of cylindrical shape or preferably slightly frusto-conical to enable a certain initial play during the positioning of the profile 24 within the seats 20, and to eliminate it completely when assembly is complete.

Covers 34 are also provided, comprising tabs 36 which snap into slots 38 defined along the sides of the outer surface of the cheeks 10, 12. The presence of these covers 34 enables the screws 16 and/or apertures present on the outer surface of the cheeks to be completely covered.

Advantageously, the edges of the upper cheek 12 are shaped with a longitudinal step for a more stable and precise fit with the edges of the lower cheek 10, which are shaped with a complementary step.

In the embodiment shown in Figures from 4 to 7, the lower cheek 10 is identical to that of the previously described embodiment, whereas the upper cheek 44 besides presenting all the aforesaid described characteristics of the upper cheek 12, also comprises four arms 46, which extend radially outwards at 90° apart. In particular, each arm 46 has a tapered profile and is provided at its free end with an aperture 48 intended to be traversed by a screw, not shown, to secure the cheek 44 to a surface, such as the surface of a table or the seating portion 9 of a chair 4 or the side of a shelving unit.

As can be seen in Figure 4, the two pairs of arms 46 are fixed to the seating portion 9 of the chair 4 and, advantageously, between them a space 50 is left to house the bracket 15 supporting the back-rest 11, which is secured to the seating portion 9 by said bracket.

From the aforegoing it is apparent that the improved coupling according to the invention presents numerous advantages and in particular:
- it can be mounted and demounted easily and quickly, even by the user, without requiring particular equipment,
- it does not use welding and is of pleasant appearance,
- it is easy and quick to produce as it requires only particularly simple mechanical operations which can be implemented on automated production lines,
- it can be used to assemble parts of furniture components which are considerably different from each other,
- it can be used as a support to retain a part of the furniture component to be assembled while the component is being mounted.

## Claims

1. An improved coupling (2) for furniture components (4), **characterised by** comprising two cheeks (10, 12) which can be fitted together, and be connected together by clamping means (16), and in which:
- each cheek (10, 12, 44) comprises a plurality of seats (20) which with similar seats of the other cheek define corresponding housings for tubular elements (24) to be secured between the two cheeks,
- each seat (20) opens at the edge of the respective cheek (10, 12, 44), has a cross-section such as to define with the corresponding seat (20) of the other cheek (10, 12, 44) a housing of cross-section slightly less than that of the tubular element (24) to be secured, and is provided with a flat longitudinal wall to block the rotation of the tubular element (24) within the housing itself,
- each seat (20) provided in at least one cheek (10, 12, 44) is provided with at least one projecting element (32) cooperating with a complementary hole provided in that tubular element (24) intended to be associated with that seat (20),
- each seat (20) of at least one cheek (12, 44) comprises an arched portion (26) which extends from the seat (20) itself towards the other cheek (10) to define with said seat (20) a closed cross-section, in which that tubular element (24) intended to be associated with that seat (20) engages.

2. A coupling as claimed in claim 1, **characterised in that** each cheek (10, 12, 44) comprises four seats (20) disposed at 90° apart and extending from the central zone of the cheek until opening at its outer edge.

3. A coupling as claimed in one or more of the preceding claims, **characterised in that** the two cheeks (10, 12, 44) are of overall polygonal shape.

4. A coupling as claimed in one or more of the preceding claims, **characterised in that** the two cheeks (10, 12, 44) are of aluminium construction.

5. A coupling as claimed in one or more of the preceding claims, **characterised in that** at least one cheek (44) is provided with arms (46) which extend radially from the cheek and are provided with means (48) for their fixing to a flat surface (9) of a furniture component (4).

6. A coupling as claimed in one or more of the preceding claims, **characterised in that** said cheek (44) is provided with two pairs of arms (46), between which a space (50) is defined which can be occupied by a part (15) of the furniture component (4) to be assembled.

7. A coupling as claimed in one or more of the preceding claims, **characterised in that** the clamping means (16) emerge beyond the outer surface of that cheek opposite that into which they were inserted, to hence define fixing means for other parts of the furniture component (4).

8. A coupling as claimed in one or more of the preceding claims, **characterised in that** each cheek (10, 12, 44) is provided with a cover plate (34) snap-fixable to its outer surface.

9. A coupling as claimed in one or more of the preceding claims, **characterised in that** each seat (20) of at least one cheek has its inner surface provided with at least one projection (30) intended to adhere by deformation at said tubular element (24) when the two cheeks (10, 12, 44) are securely connected together and retain the tubular element (24).

10. A coupling as claimed in one or more of the preceding claims, **characterised in that** each seat (20) of a cheek (10) comprises a recess (28) intended, when the two cheeks are coupled together, to at least partially receive the arched portion (26) which extends from the corresponding seat (20) of the other cheek (12, 44).

11. A coupling as claimed in one or more of the preceding claims, **characterised in that** each cheek (10, 12, 44) has its edges provided with a step intended to engage the complementary step provided in the edge of the other cheek (10, 12, 44).

12. A coupling as claimed in one or more of the preceding claims, **characterised in that** the housing defined by the pairs of corresponding seats (20) defined in the two coupled cheeks (10, 12, 44) is of substantially square cross-section.
